# EUROPEAN PATENT APPLICATION

(11) **EP 4 722 557 A1**
(43) Date of publication of application: **08.04.2026**
(21) Application number: 25206575.0
(22) Date of filing: 03.10.2025
(51) Int. Cl.: F16F 1/12

(54) **SUSPENSION DEVICE AND STRADDLED VEHICLE HAVING THE SAME**

(30) Priority: 07.10.2024 JP 2024175757
(71) Applicant: Yamaha Hatsudoki Kabushiki Kaisha, Iwata-shi, Shizuoka 438-8501 (JP)
(72) Inventor: TAKAHASHI, Keisuke, Iwata-shI 4388501 (JP)
(74) Representative: Studio Torta S.p.A.

(57) **Abstract**

There is disclosed a suspension device **(1)** includinga cylinder **(10),** a piston rod **(20),** a spring **(30),** a spring bearing **(43)** supporting a first end **(31)** of the spring **(30),** a stopper **(13)** projecting outward in a radial direction of the cylinder **(10),** and an adjuster **(50)** supporting a second end **(32)** of the spring **(30)** and being supported by the stopper **(13),** the adjuster **(50)** being rotatable relative to the cylinder **(10);** the adjuster **(50)** including a spring seat **(60)** having a plurality of cam surfaces **(66),** each having a different position in the axial direction of the cylinder **(10)** and being engaged with the stopper **(13),** and a grip **(70)** that rotates together with the spring seat **(60)** and has a gripping surface **(70a)** to be gripped by a hand of an operator. (Figure 2).

## Description

### TECHNICAL FIELD

The present invention relates to a suspension device and a straddled vehicle having the same.

### BACKGROUND

Suspension devices are used in motorcycles, etc., to mitigate impacts from the road surface. Suspensions with adjustable spring initial loads have been known in the art, as disclosed in JP 2019-60386 A, for example.

The suspension device disclosed in JP 2019-60386 A includes a cylinder, a piston rod extending from the cylinder, and a spring arranged around the cylinder and the piston rod. A bracket is fixed to the distal end of the piston rod, and a cam adjuster is rotatably attached to the bracket. The upper end of the spring is supported by a spring bearing formed on the cylinder, and the lower end of the spring is supported by a spring bearing formed on the cam adjuster. A stopper projecting outward in the radial direction is provided on the outer surface of the bracket. The cam adjuster has a plurality of cam surfaces that engage with the stopper. As the cam adjuster is rotated, the cam surface that engages with the stopper is changed, and the position of the cam adjuster in the cylinder axis direction is changed. Thus, as the position of the spring bearing of the cam adjuster is changed, the initial length of the spring is changed, thereby changing the initial load of the spring.

The cam adjuster has a plurality of engagement grooves for tool engagement. The can adjuster can be rotated by engaging a tool with the engagement grooves and rotating the tool. With the suspension device described above, it is possible to adjust the initial load of the spring by using a tool as described above.

The suspension device described above, however, requires a special tool for adjusting the initial load of the spring. The need to provide a special tool deteriorates the convenience.

An object of the present invention is to provide a convenient suspension device capable of adjusting the initial load of the spring, and a straddled vehicle having the same.

### DISCLOSURE OF THE INVENTION

A suspension device disclosed herein includes: a cylinder; a piston rod inserted in the cylinder and being movable in an axial direction; a spring arranged around the cylinder and the piston rod, the spring having a first end and a second end; a spring bearing fixed to the piston rod and supporting the first end of the spring; a stopper provided on the cylinder so as to project outward in a radial direction of the cylinder; and an adjuster into which the cylinder is inserted, the adjuster directly or indirectly supporting the second end of the spring and being supported by the stopper, and the adjuster being rotatable relative to the cylinder. The adjuster includes a spring seat having a plurality of cam surfaces, each having a different position in the axial direction of the cylinder and being engaged with the stopper, and a grip that rotates together with the spring seat and has a gripping surface to be gripped by a hand of an operator.

With the suspension device described above, as the operator grips and rotates the grip, the cam surface to be engaged with the stopper is changed to another, thereby changing the position of the adjuster in the axial direction of the cylinder. Thus, the initial length of the spring changes, thereby changing the initial load of the spring. With the suspension device described above, the initial load of the spring can be adjusted by the operator only by rotating the grip by hand. Since no special tools are required, it is possible to improve the convenience.

The grip may be formed separately from the spring seat and assembled to the spring seat.

Therefore, the grip and the spring seat can be made of different materials. Since the grip does not need to be integrally formed with the spring seat, the grip can be easily manufactured.

One of the spring seat and the grip may have a protrusion that projects outward or inward in the radial direction, and the other one of the spring seat and the grip may have a recess that engages with the protrusion.

Therefore, when the grip is rotated, the rotational force of the grip is transmitted to the spring seat through the engagement between the protrusion and the recess, thereby rotating the spring seat. Although the grip and the spring seat are separate parts, the spring seat can be rotated by rotating the grip. It is possible to adjust the initial load of the spring by rotating the grip.

The spring seat may include a first annular portion, a plurality of first protrusions projecting outward in a radial direction of the first annular portion, and a first cylindrical portion extending in the axial direction of the cylinder from the first annular portion. The plurality of cam surfaces may be formed of an end surface of the first cylindrical portion. The grip may include a second annular portion, a plurality of second protrusions provided on a surface of the second annular portion that opposes the first annular portion and arranged circumferentially spaced apart from each other, and a second cylindrical portion extending in the axial direction of the cylinder from the second annular portion and arranged around the first cylindrical portion. The spring seat and the grip may be assembled together by fitting the second protrusions each between adjacent first protrusions of the first annular portion.

With such a configuration, the rotational force of the grip can be desirably transmitted to the spring seat.

The spring seat and the grip may be made of different materials.

Therefore, it is possible to use a suitable material for each of the spring seat and the grip with no such limitation that the materials of the spring seat and the grip need to be the same. It is possible to improve the design freedom of the spring seat and the grip.

The spring seat may be made of a metal. The grip may be made of a resin.

Therefore, it is possible to improve the mechanical strength of the spring seat, and to reduce the weight and cost of the grip.

An outer diameter of the grip may be larger than an outer diameter of the spring seat.

Therefore, since the grip is relatively large, it is easy for the operator to grasp the grip. Since the operator can rotate the grip with relatively little force, it is possible to easily adjust the initial load of the spring.

The grip may include a cylindrical portion of a cylindrical shape arranged concentrically with the cylinder.

Therefore, the cylindrical portion has a shape that is easy to grasp by hand, so the operator can easily rotate the grip. The operator can easily adjust the initial load of the spring.

An anti-slip portion, being a recess or a protrusion extending in the axial direction, may be formed on an outer surface of the cylindrical portion.

Therefore, the hand of the operator is less likely to slip when rotating the grip. Since the operator can easily rotate the grip, it is possible to easily adjust the initial load of the spring.

The cylinder may be a multi-tube cylinder having an outer tube, and an inner tube arranged inside the outer tube. The stopper may be welded to an outer surface of the outer tube.

Since the outer tube is arranged outside the inner tube, the inner tube is unlikely to be distorted even if the stopper is welded to the outer tube. Therefore, the stopper can be welded to the cylinder without impairing the performance of the suspension device.

The suspension device may include a spring guide arranged between the second end of the spring and the adjuster.

Therefore, since the spring guide is interposed between the second end of the spring and the adjuster, the load of the spring is not applied directly to the adjuster. It is possible to suppress the adjuster from deteriorating over time.

A straddled vehicle disclosed herein has the suspension device described above.

According to the present invention, it is possible to provide a suspension device capable of adjusting the initial load of the spring, and a straddled vehicle having the same.

### BRIEF DESCRIPTION OF DRAWINGS

Fig. **1** **is** a side view of a motorcycle according to an embodiment.
Fig. **2** is a front view of a suspension device according to an embodiment.
Fig. **3** is a cross-sectional view along line III-III in Fig. **2****.**
Fig. **4** is a perspective view of the suspension device, where the grip is not shown.
Fig. **5** **is** an exploded perspective view of an adjuster.
Fig. **6(a)** is a front view of the adjuster. Fig. **6(b)** is a bottom view of the adjuster.
Fig. **7(a)** is a plan view of a spring seat. Fig. **7(b)** is a front view of the spring seat.

### EMBODIMENTS OF THE INVENTION

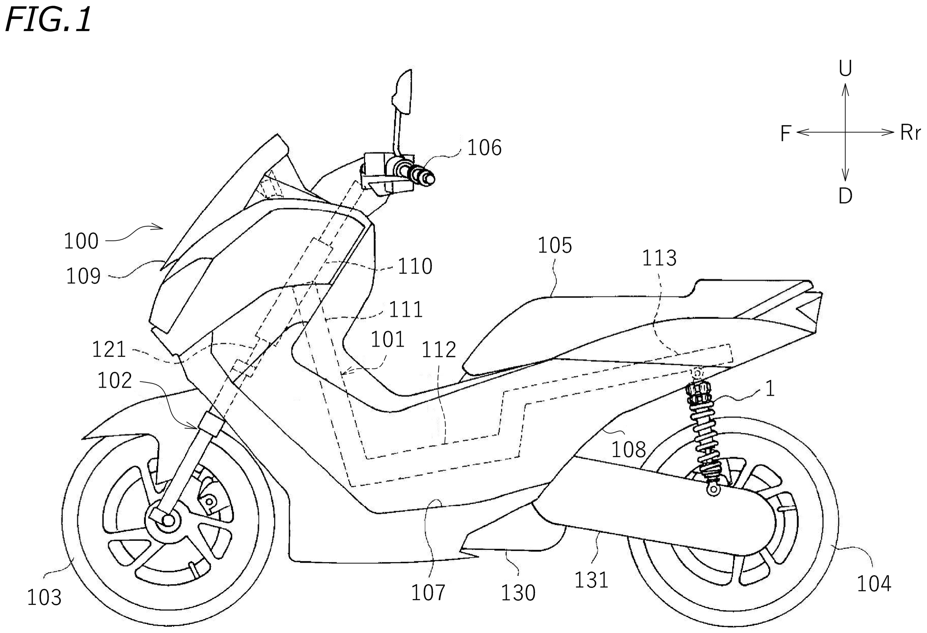

Hereinafter, with reference to the drawings, an embodiment of a suspension device and a straddled vehicle having the same will be described. Fig. **1** is a side view of a motorcycle **100,** which is an example of the straddled vehicle. Note that the motorcycle **100** according to the present embodiment is a scooter, but the form of the motorcycle is not limited to a scooter.

The terms front, rear, left, right, up, and down, as used in the description below, refer to these directions as seen from a virtual passenger seated on a seat **105** while a motorcycle **100** is standing upright on a horizontal surface with no passenger and no load thereon, unless specified otherwise. The designations F, Rr, U, and D, as used in the figures, refer to front, rear, up, and down, respectively.

The motorcycle **100** includes a vehicle body frame **101,** a seat **105** supported by the vehicle body frame **101,** an internal combustion engine (hereinafter referred to as the engine) **130** as a driving source for running, a handle **106,** a front wheel **103,** a rear wheel **104,** and a suspension device **1.**

The vehicle body frame **101** includes a head pipe **110,** a down frame 111 extending rearward and downward from the head pipe **110,** an under frame **112** extending rearward from the lower end of the down frame **111,** and a seat frame **113** extending rearward from the rear end of the under frame **112.** The seat **105** is supported by the seat frame **113.**

The head pipe **110** is arranged inside the front cover **109.** A steering shaft **121** is inserted in the head pipe **110.** The handle **106** is connected to the upper end of the steering shaft **121.** A front fork **102** is connected to the lower end of the steering shaft **121.** The front wheel **103** is connected to the lower end of the front fork **102.**

Left and right footboards **107** are arranged downward of the seat **105.** The footboards **107** are platforms that support the feet of the driver seated on the seat **105.** A center cover **108** is arranged between the left footboard **107** and the right footboard **107.** The down frame **111** and the under frame **112** are arranged inside the center cover **108.** The engine **130** is supported by the vehicle body frame **101.** A part of the engine **130** is arranged inside the center cover **108.**

The engine **130** and the rear wheel **104** are connected by a power transmission device **131.** The power transmission device **131** transmits the driving force of the engine **130** to the rear wheel **104.** Although not shown in the figure, the power transmission device **131** of the present embodiment is implemented by a belt-type continuously variable transmission.

The suspension device 1 serves to mitigate and absorb impacts applied to the rear wheel **104** from the ground. The suspension device **1** is connected to the seat frame **113** and the rear wheel **104.** Specifically, the upper end of the suspension device **1** is connected to the seat frame **113,** and the lower end of the suspension device **1** is connected to the power transmission device **131** connected to the axle (not shown) of the rear wheel **104.** The suspension device **1** is indirectly connected to the rear wheel **104.** Next, the detailed configuration of the suspension device **1** will be described.

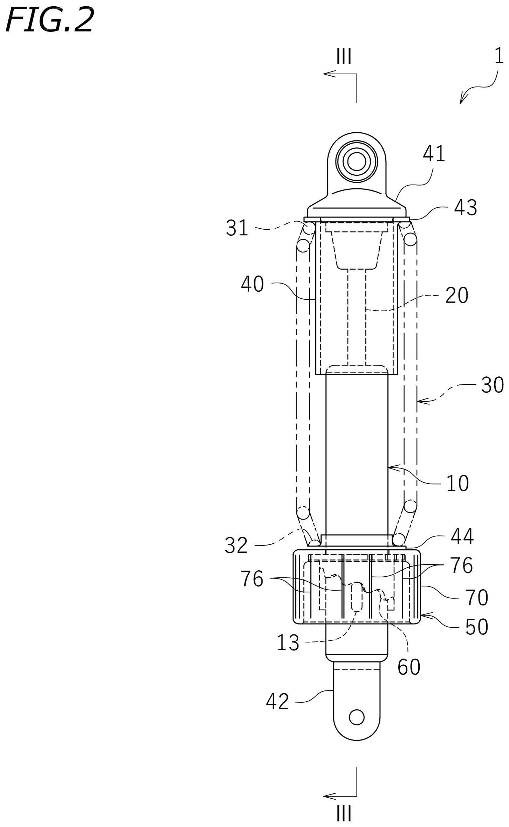

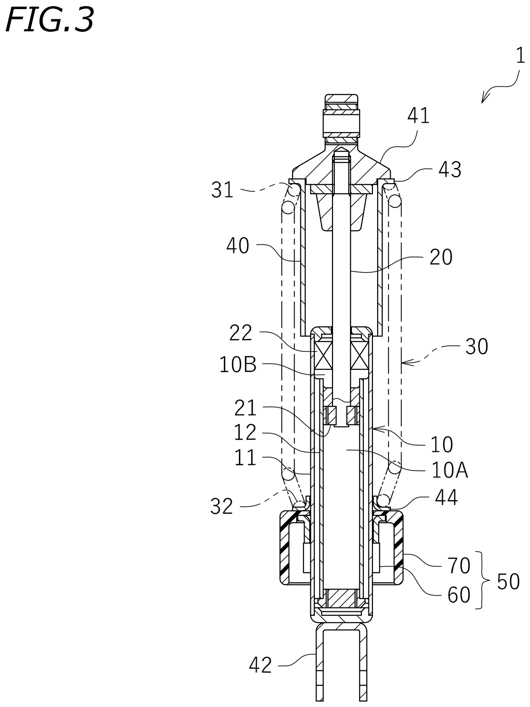

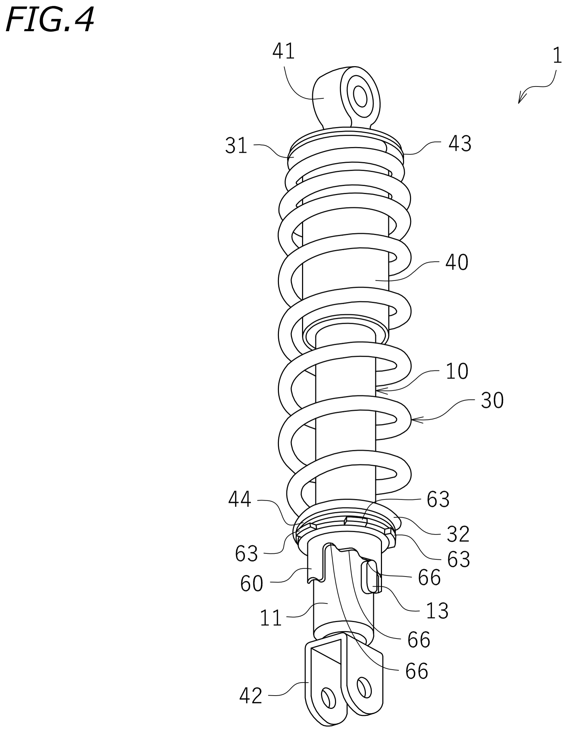

Fig. **2** is a view of the suspension device **1** as seen from the left side the vehicle left-right direction, and is a front view of the suspension device **1.** Fig. **3** is a cross-sectional view taken along line III-III in Fig. **2****.** Fig. **4** is a perspective view of the suspension device **1,** where the grip **70** to be described later is not shown. As shown in Fig. **2****,** the suspension device **1** includes a cylinder **10,** a piston rod **20** inserted in the cylinder **10** so as to be movable in the axial direction, a spring **30** arranged around the cylinder **10** and the piston rod **20,** a cylindrical rod cover **40,** and an adjuster **50** for adjusting the initial load of the spring **30.**

As shown in Fig. **3****,** the cylinder **10** includes a cylindrical outer tube **11** and a cylindrical inner tube **12** arranged inside the outer tube **11.** The cylinder **10** is a multi-tube cylinder. The outer tube **11** and the inner tube **12** are arranged concentrically. As shown in Fig. **4****,** the outer tube **11** of the cylinder **10** includes a stopper **13** that projects outward in the radial direction of the cylinder **10.** Here, the stopper **13** is welded to the outer tube **11.**

As shown in Fig. **3****,** a rod guide **22** is fixed inside the outer tube **11.** The piston rod **20** extends through the rod guide **22.** The rod guide **22** slidably supports the piston rod **20.** A piston **21** is fixed to the lower end of the piston rod **20.** The piston **21** divides the interior of the cylinder **10** into a first chamber **10A** and a second chamber **10B.** The first chamber **10A** and the second chamber **10B** contain an operating fluid. In the present embodiment, oil is contained in the first chamber **10A** and the second chamber **10B** as the operating fluid. Note however that the operating fluid is not limited to oil.

Although not shown in the figure, the piston **21** includes a first passage and a second passage that connect together the first chamber **10A** and the second chamber **10B.** The piston **21** also includes a first valve arranged in the first chamber **10A** and a second valve arranged in the second chamber **10B.** The first valve is configured to provide resistance to oil flowing through the first passage. The second valve is configured to provide resistance to oil flowing through the second passage. In the following description, an increase of the length of projection of the piston rod **20** relative to the cylinder **10** may be referred to also as an extension of the piston rod **20,** and a decrease of the length of projection of the piston rod **20** relative to the cylinder **10** decreases may be referred to also as a retraction of the piston rod **20.** When the piston **21** moves upward, the piston rod **20** extends, and when the piston **21** moves downward, the piston rod **20** retracts. When the piston rod **20** extends, oil flows from the second chamber **10B** to the first chamber **10A** through the first passage of the piston **21.** At this time, resistance is applied to the flow of oil by the first valve, thereby generating a damping force. When the piston rod **20** contracts, oil flows from the first chamber **10A** to the second chamber **10B** through the second passage of the piston **21.** At this time, the second valve provides resistance to the flow of oil, thereby generating a damping force. As described above, a damping force is generated in the suspension device **1** following the extension and contraction of the piston rod **20.**

The spring **30** is a compression coil spring and has a first end **31** and a second end **32.** A bracket **41** is fixed to the upper end of the piston rod **20.** A rod cover **40** is fixed to the bracket **41.** Therefore, the rod cover **40** is movable relative to the cylinder **10** as is the piston rod 20. A spring bearing 43 extending outward in the radial direction is formed at the upper end of the rod cover 40. The spring bearing 43 supports the first end 31 of the spring 30. Here, the spring bearing 43 is indirectly fixed to the piston rod 20 via the bracket 41. While the spring bearing 43 is a part of the rod cover 40 in the present embodiment, the spring bearing 43 may be separate from the rod cover 40. The spring bearing 43 may be fixed directly to the piston rod **20.**

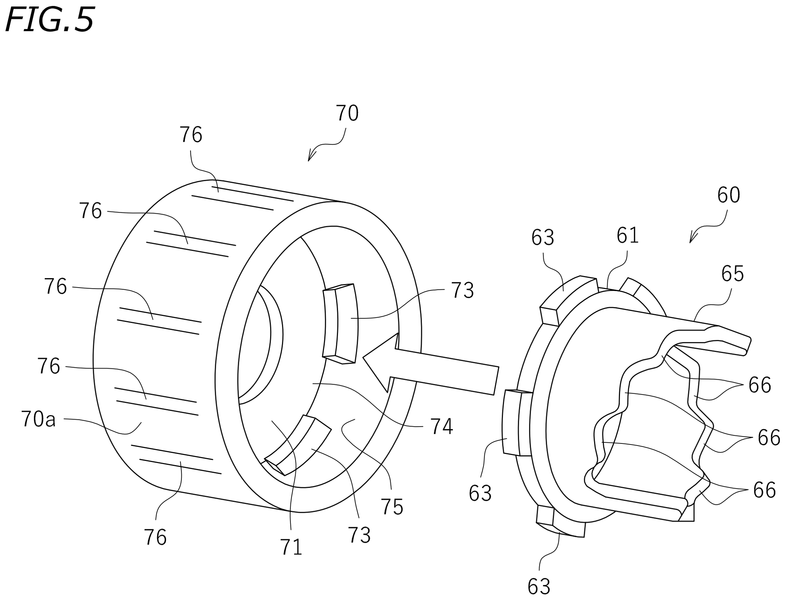

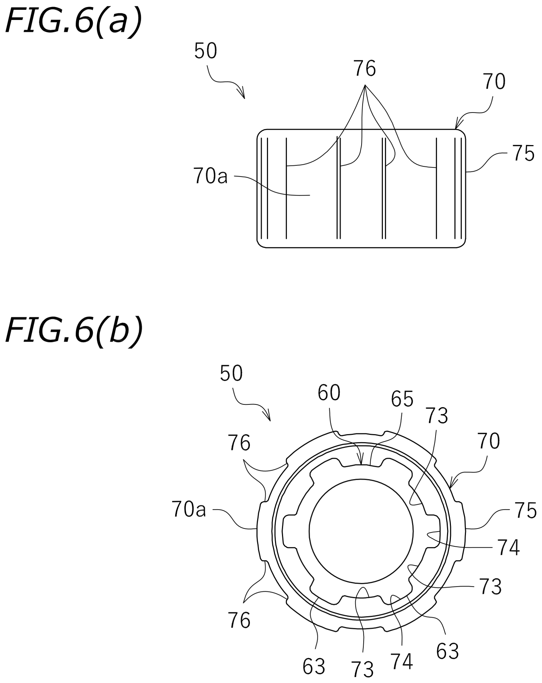

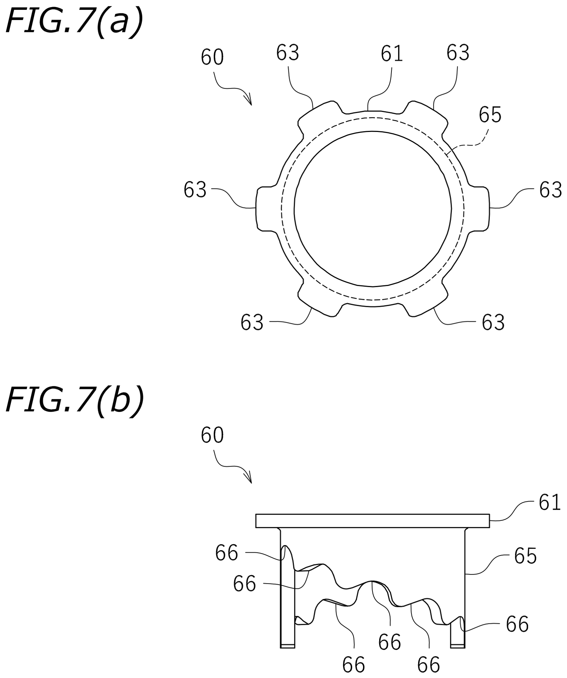

As shown in Fig. **3****,** the adjuster **50** according to the present embodiment includes a spring seat **60** and the grip **70.** As shown in Fig. **5****,** the spring seat **60** and the grip **70** are formed separately. The spring seat **60** and the grip **70** are assembled together. Fig. **6(a)** and Fig. **6(b)** are a front view and a bottom view, respectively, of the adjuster **50.** Fig. **7(a)** and Fig. **7(b)** are a plan view and a front view, respectively, of the spring seat **60.**

The spring seat **60** has a first annular portion **61,** a plurality of first protrusions **63** projecting outward in the radial direction of the first annular portion **61,** and a first cylindrical portion **65** extending in the axial direction of the cylinder **10** from the first annular portion **61.** The plurality of first protrusions **63** are arranged circumferentially about the axis of the cylinder **10.** A plurality of cam surfaces **66,** each having a different position in the axial direction of the cylinder **10,** are formed on the end surface of the first cylindrical portion **65.** As shown in Fig. **4****,** the cam surfaces **66** are formed so as to be engageable with the stopper **13** of the cylinder **10.** These cam surfaces **66** are arranged in the circumferential direction of the cylinder **10.**

As shown in Fig. **5****,** the grip **70** includes a second annular portion **71,** a plurality of second protrusions **73** provided on a surface of the second annular portion **71** that opposes the first annular portion **61,** and a second cylindrical portion **75** extending in the axial direction of the cylinder **10** from the second annular portion **71.** The second protrusions **73** are arranged circumferentially spaced apart from each other. Recesses **74** are formed each between second protrusions **73** that are adjacent to each other in the circumferential direction. The inner diameter of the second cylindrical portion **75** is larger than the outer diameter of the first cylindrical portion **65.** The second cylindrical portion **75** is arranged around the first cylindrical portion **65.** The spring seat **60** is fitted into the grip **70.** The outer diameter of the grip **70** is larger than the outer diameter of the spring seat **60.** The outer surface of the second cylindrical portion **75** forms a gripping surface **70a** that is gripped by the hand of the operator. The gripping surface **70a** includes anti-slip portions **76,** being recesses or protrusions extending in the axial direction of the cylinder **10.** Note that the axial direction of the cylinder **10** as used herein includes not only the direction extending in the axial direction of the cylinder **10** on the axis of the cylinder **10,** but also the direction extending in the axial direction of the cylinder **10** at a position parallel to the axis of the cylinder **10.**

The spring seat **60** and the grip **70** are assembled together by inserting the spring seat **60** into the grip **70.** The first protrusions **63** of the spring seat **60** are inserted in the recesses **74** of the grip **70.** The first protrusions **63** engage with the recesses **74.** Thus, the spring seat **60** and the grip **70** are assembled together by fitting the second protrusions **73** each between adjacent first protrusions **63** of the first annular portion **61.**

The spring seat **60** and the grip **70** are made of different materials. Here, the spring seat **60** is made of a metal such as iron or stainless steel, and the grip **70** is made of a resin. The spring seat **60** is formed of a material that is more rigid than the material of the grip **70.** Note however that there is no particular limitation on the materials of the spring seat **60** and the grip **70.** The grip **70** may be made of aluminum.

The adjuster **50** directly or indirectly supports the second end **32** of the spring **30.** In the present embodiment, as shown in Fig. **3****,** the adjuster **50** indirectly supports the second end **32** of the spring **30** via a spring guide **44.** The spring guide **44** is arranged between the second end **32** of the spring **30** and the adjuster **50.** Specifically, the spring guide **44** is arranged between the second end **32** of the spring **30** and the second annular portion **71** of the grip **70.**

With the suspension device **1,** it is possible to adjust the initial load of the spring **30** by rotating the adjuster **50.** As shown in Fig. **4****,** the stopper **13** of the cylinder **10** is engaged with the cam surface **66** of the spring seat **60.** Since the first protrusions **63** of the spring seat **60** and the second protrusions **73** of the grip **70** are engaged with each other as described above, the spring seat **60** rotates together with the grip **70** as the operator rotates the grip **70.** When the spring seat **60** rotates, the cam surfaces **66** move in the circumferential direction, so the stopper **13** moves away from one cam surface **66** with which the stopper **13** has been engaged and engages with another adjacent cam surface **66.** Adjacent cam surfaces **66** are at different positions in the axial direction of the cylinder **10.** Therefore, as the stopper **13** engages with a different cam surface **66,** it changes the position of the adjuster **50** in the axial direction of the cylinder **10.** Thus, the position of the second end **32** of the spring **30** changes, and the length of the spring **30** in the axial direction of the cylinder **10** is changed. As a result, the initial load of the spring **30** is adjusted.

As described above, with the suspension device 1 of the present embodiment, when the operator grips and rotates the grip **70,** the cam surface **66** to be engaged with the stopper **13** is changed to another, from among a plurality of cam surfaces **66** of the spring seat **60,** thereby changing the position of the adjuster **50** in the axial direction of the cylinder **10.** Thus, the initial length of the spring **30** changes, and it is possible to change the initial load of the spring **30.** With the suspension device **1,** the initial load of the spring **30** can be adjusted by the operator only by rotating the grip **70** by hand. Since no special tools are required to adjust the initial load of the spring **30,** it is possible to improve the convenience of the suspension device **1.**

While the spring seat **60** and the grip **70** may be an integral part, the grip **70** is formed separately from the spring seat **60** and is assembled to the spring seat **60** in the present embodiment. Since the grip **70** and the spring seat **60** are separate parts, the grip **70** and the spring seat **60** can be made of different materials. Since the grip **70** does not need to be integrally formed with the spring seat **60,** the grip **70** can be easily manufactured.

As shown in Fig. **5****,** the spring seat **60** includes the first protrusions **63** extending outward in the radial direction, and the grip **70** includes the recesses **74** that engage with the first protrusions **63.** Therefore, when the grip **70** is rotated, the rotational force of the grip **70** is transmitted to the spring seat **60** through the engagement between the first protrusions **63** and the recesses **74,** thereby rotating the spring seat **60.** Although the grip **70** and the spring seat **60** are separate parts, the spring seat **60** can be rotated by rotating the grip **70.** Thus, the operator can adjust the initial load of the spring **30** only by rotating the grip **70.**

Note that the grip **70** and the spring seat **60** may be assembled so that the rotational force of the grip **70** is transmitted to the spring seat **60,** and there is no particular limitation on the specific configuration therefor. For example, the spring seat **60** may include protrusions extending inward in the radial direction, and the grip **70** may include recesses that engage with the protrusions. Alternatively, the grip **70** may include protrusions extending outward or inward in the radial direction, and the spring seat may include recesses that engage with the protrusions.

According to the present embodiment, the spring seat **60** includes the first annular portion **61,** the plurality of first protrusions **63,** and the first cylindrical portion **65,** and the plurality of cam surfaces **66** are formed on the end surface of the first cylindrical portion **65.** The grip **70** includes the second annular portion **71,** the second protrusions **73,** and the second cylindrical portion **75.** Then, the spring seat **60** and the grip **70** are assembled together by fitting the second protrusions **73** each between adjacent first protrusions **63** of the first annular portion **61.** With such a configuration, the rotational force of the grip **70** can be desirably transmitted to the spring seat **60.**

There is no particular limitation on the materials of the spring seat **60** and the grip **70,** and the material of the spring seat **60** and the material of the grip **70** may be the same. Note however that in the present embodiment, the spring seat **60** and the grip **70** are made of different materials. Therefore, it is possible to use a suitable material for each of the spring seat **60** and the grip **70** with no such limitation that the materials of the spring seat **60** and the grip **70** need to be the same. For example, one of the spring seat **60** and the grip **70** can be standardized for a plurality of types of suspension devices, while the other is individually designed depending on the type of the suspension device. Thus, it is possible to improve the design freedom of the spring seat **60** and the grip **70.**

In the present embodiment, the spring seat **60** is made of a metal, and the grip **70** is made of a resin. Since the spring seat **60** is sandwiched between the spring **30** and the stopper **13** as shown in Fig. **4****,** a relatively large load is applied to the spring **seat 60.** As the spring seat **60** is made of a metal, it is possible to improve the mechanical strength of the spring seat **60.** On the other hand, as the grip **70** is made of a resin, it is possible to reduce the weight and cost of the grip **70.**

In the present embodiment, the outer diameter of the grip **70** is larger than the outer diameter of the spring seat **60.** Since the grip **70** is relatively large, it is easy for the operator to grasp the grip **70.** Since the operator can rotate the grip **70** with relatively little force, it is possible to easily adjust the initial load of the spring **30.**

The grip **70** includes the second cylindrical portion **75** arranged concentrically with the cylinder 10. The second cylindrical portion 75 has a shape that is easy to grasp by hand, so the operator can easily rotate the grip **70.**

The anti-slip portions **76,** being recesses or protrusions extending in the axial direction, are formed on outer surface of the second cylindrical portion **75.** This suppresses the hand of the operator from slipping on the surface of the second cylindrical portion **75** when rotating the grip **70.** Since the operator can easily rotate the grip **70,** it is possible to easily adjust the initial load of the spring **30.**

There is no particular limitation on the configuration of the cylinder **10,** and the cylinder **10** may be a single-tube cylinder. Note however that in the present embodiment, the cylinder **10** is a multi-tube cylinder having the outer tube **11** and the inner tube **12.** Since the outer tube **11** is arranged outside the inner tube **12,** the inner tube **12** is unlikely to be distorted even if the stopper **13** is welded to the outer tube **11.** Therefore, the stopper **13** can be welded to the cylinder **10** without impairing the performance of the suspension device **1.** The stopper **13** receives the load of the spring **30** via the adjuster **50.** By welding the stopper **13** to the cylinder **10,** it is possible to sufficiently ensure the mechanical strength of the stopper **13.** With the stopper 13, it is possible to sufficiently support the load of the spring **30.**

While the second end **32** of the spring **30** may be in direct contact with the adjuster **50,** the spring guide **44** is arranged between the second end **32** of the spring **30** and the adjuster **50** in the present embodiment. Since the spring guide **44** is interposed between the second end **32** of the spring **30** and the adjuster **50,** the load of the spring **30** is not applied directly to the adjuster **50.** It is possible to suppress a large load from being applied locally to the adjuster **50.** It is possible to suppress the adjuster **50** from deteriorating over time.

One embodiment of a suspension device and a straddled vehicle has been described above. However, the embodiment described above is merely an example, and various other embodiments are possible.

While the grip **70** is formed in a cylindrical shape in the embodiment described above, there is no particular limitation on the shape of the grip **70.** The shape of the grip **70** may be any shape that is easy for the operator to grip. For example, the grip **70** may be formed in a generally triangular cylindrical shape.

There is no particular limitation on the shape of the anti-slip portions **76** of the grip **70.** The anti-slip portions **76** may be omitted.

A straddled vehicle refers to a vehicle that is straddled by a passenger. The straddled vehicle is not limited to the motorcycle **100.** The straddled vehicle may be an auto tricycle, an ATV (All Terrain Vehicle), or a snowmobile, for example.

### DESCRIPTION OF REFERENCE SIGNS

1: Suspension device, 10: Cylinder, 11: Outer tube, 12: Inner tube, 13: Stopper, 20: Piston rod, 30: Spring, 31: First end, 32: Second end, 43: Spring bearing, 44: Spring guide, 50: Adjuster, 60: Spring seat, 61: First annular portion, 63: First protrusion (protrusion), 65: First cylindrical portion, 66: Cam surface, 70: Grip, 70a: Gripping surface, 71: Second annular portion, 73: Second protrusion, 74: Recess, 75: Second cylindrical portion (cylindrical portion), 76: Anti-slip portion, 100: Motorcycle (straddled vehicle)

## Claims

1. A suspension device **(1),** comprising:
a cylinder **(10);**
a piston rod **(20)** inserted in the cylinder **(10)** and being movable in an axial direction;
a spring **(30)** arranged around the cylinder **(10)** and the piston rod **(20),** the spring **(30)** having a first end **(31)** and a second end **(32);**
a spring bearing **(43)** fixed to the piston rod **(20)** and supporting the first end **(31)** of the spring **(30);**
a stopper **(13)** provided on the cylinder **(10)** so as to project outward in a radial direction of the cylinder **(10);** and
an adjuster **(50)** into which the cylinder **(10)** is inserted, the adjuster **(50)** directly or indirectly supporting the second end **(32)** of the spring **(30)** and being supported by the stopper (13), and the adjuster **(50)** being rotatable relative to the cylinder **(10),**
wherein the adjuster **(50)** includes a spring seat **(60)** having a plurality of cam surfaces **(66),** each having a different position in the axial direction of the cylinder **(10)** and being engaged with the stopper **(13),** and a grip **(70)** that rotates together with the spring seat **(60)** and has a gripping surface **(70a)** to be gripped by a hand of an operator.

2. The suspension device **(1)** according to claim 1, wherein the grip **(70)** is formed separately from the spring seat **(60)** and assembled to the spring seat **(60).**

3. The suspension device **(1)** according to claim 2, wherein one of the spring seat **(60)** and the grip **(70)** has a protrusion **(63)** that projects outward or inward in the radial direction, and the other one of the spring seat **(60)** and the grip **(70)** has a recess **(74)** that engages with the protrusion **(63).**

4. The suspension device **(1)** according to claim 2, wherein:
the spring seat **(60)** includes a first annular portion **(61),** a plurality of first protrusions **(63)** projecting outward in a radial direction of the first annular portion **(61),** and a first cylindrical portion **(65)** extending in the axial direction of the cylinder **(10)** from the first annular portion **(61);**
the plurality of cam surfaces **(66)** are formed of an end surface of the first cylindrical portion **(65);**
the grip **(70)** includes a second annular portion **(71),** a plurality of second protrusions **(73)** provided on a surface of the second annular portion **(71)** that opposes the first annular portion **(61)** and arranged circumferentially spaced apart from each other, and a second cylindrical portion **(75)** extending in the axial direction of the cylinder **(10)** from the second annular portion **(71)** and arranged around the first cylindrical portion **(65);** and
the spring seat **(60)** and the grip **(70)** are assembled together by fitting the second protrusions **(73)** each between adjacent first protrusions **(63)** of the first annular portion **(61).**

5. The suspension device **(1)** according to any one of claims 2 to 4, wherein the spring seat **(60)** and the grip **(70)** are made of different materials.

6. The suspension device **(1)** according to any one of claims 2 to 4, wherein the spring seat **(60)** is made of a metal, and the grip **(70)** is made of a resin.

7. The suspension device **(1)** according to any one of claims 1 to 6, wherein an outer diameter of the grip **(70)** is larger than an outer diameter of the spring seat **(60).**

8. The suspension device **(1)** according to any one of claims 1 to 7, wherein the grip **(70)** includes a cylindrical portion **(75)** of a cylindrical shape arranged concentrically with the cylinder **(10).**

9. The suspension device **(1)** according to claim 8, wherein an anti-slip portion **(76),** being a recess or a protrusion extending in the axial direction, is formed on an outer surface of the cylindrical portion **(75).**

10. The suspension device **(1)** according to any one of claims 1 to 9, wherein:
the cylinder **(10)** is a multi-tube cylinder having an outer tube **(11),** and an inner tube **(12)** arranged inside the outer tube **(11);** and
the stopper **(13)** is welded to an outer surface of the outer tube **(11).**

11. The suspension device **(1)** according to any one of claims 1 to 10, comprising a spring guide **(44)** arranged between the second end **(32)** of the spring **(30)** and the adjuster **(50).**

12. A straddled vehicle **(100),** comprising the suspension device **(1)** according to any one of claims 1 to 11.
